# EUROPEAN PATENT SPECIFICATION

(11) **EP 0 804 662 B1**
(45) Date of publication and mention of the grant of the patent: **16.09.1998**
(21) Application number: 94917762.0
(22) Date of filing: 16.06.1994
(51) Int. Cl.: E04G 13/00, F16L 3/22

(54) **CASTING MOULD ARRANGEMENT FOR THE EMBEDDING OF PIPES**
GUSSFORM ZUM EINGRABEN VON ROHREN
STRUCTURE DE MOULE POUR TUBES NOYES

(43) Date of publication of application: 05.11.1997
(73) Proprietor: Oslo Presstoff Industri A/S, 0212 Oslo (NO)
(72) Inventor: SOLBJÖRG, Öistein, N-0280 Oslo (NO)
(74) Representative: Lettström, Richard Wilhelm
(86) International application number: IB9400120
(87) International publication number: WO9534728

(56) References cited:
- NO-B- 163 635
- SE-A- 9 301 694
- US-A- 3 464 661
- US-A- 3 856 246

## Description

The present invention relates to a casting mould arrangement for the embedding of pipes, in which the individual pipes are assumed to be placed substantially at a predetermined distance from one another and which comprises at least two base parts and at least one intermediate part, which parts are provided with recesses intended to hold the pipes securely and to fix these in position, sockets which have a holder arm and are arranged at each end of the said base part in order to hold securely mould panels which are located on the sides of the casting mould and which delimit the casting mould laterally, and means for receiving reinforcement bars. The invention also relates to the base part included in the arrangement.

Such an arrangement, which is known from Norwegian Patent NO-B-163635, is intended to support the pipes and the mould panels at a predetermined distance from one another for the purposes of casting. When the frame forming the mould is set up and, if appropriate, reinforcement bars have been placed in the mould, concrete is poured into the latter in order to obtain a stable, protected and continuously extending pipe assembly. The problems which arise in the case of this arrangement are, on the one hand, that the reinforcement bars cannot be placed at defined distances from the top, bottom and/or sides of the casting mould, and, on the other hand, that the casting mould cannot be held together when the concrete is poured into the latter, due to the fact that the displaced concrete presses the pipes upwards and that the concrete presses against the mould panels.

A known further development of this known arrangement is shown in Figs. 1a - d, in which it can be seen how a frame has been set up for embedding of the pipe assembly, the latter in this case consisting of nine pipes. As can be seen from these figures, the sockets included in the arrangement have continuous and closed recesses through which reinforcement bars are passed prior to casting. since the pipe assembly often follows a path which is not completely straight, it is impossible to place the reinforcement bars precisely at the intended position.

An object of the present invention is to produce an arrangement and a base part included therein of the type mentioned in the introduction, in which, by eliminating the disadvantages, described above, of the known arrangements, an arrangement and a base part included therein are produced in which the precise mutual positioning of the pipes and of the reinforcement bars in predetermined positions in the casting mould is facilitated, and, consequently, the parts included in the casting mould are held together well during casting.

This object is achieved by an arrangement and by a base part included therein which have been given the characteristics specified in the main claims 1 and 7.

Preferred embodiments of the arrangement and of the base part included therein have been given the characteristics specified in the subclaims.

By means of the arrangement and of the base part included therein according to the invention, the reinforcement bars can be put into place by a simple manoeuvre, during the actual setting-up of the pipe assembly in the frame forming the mould, with the aid of the recesses which are arranged on the sockets and which have pockets into which the reinforcement bars are intended to be snapped tight.

The invention is described in greater detail hereinbelow with reference to the attached drawings which show preferred embodiments of the arrangement and of the base part included therein according to the invention.

Figs. 1a - 1d show the method for assembling a conventional arrangement.

Fig. 2 shows a front view of a first embodiment of a base part according to the invention.

Fig. 3 shows a partial front view of a second embodiment of a base part according to the invention.

Fig. 4 shows a perspective view of a separate part intended to be connected to a socket included in the base part according to Fig. 3.

Fig. 5 is a perspective view of a third embodiment of a base part according to the invention, in which pockets for three reinforcement bars have been positioned and designed in a manner different from that in the embodiments according to Figs. 2 - 4.

Fig. 6 shows a detailed perspective view of the fitting of reinforcement bars in recesses provided in the embodiment according to Fig. 5.

Fig. 7 shows a modified variant of the third embodiment of the base part according to Fig. 5 in a partially assembled state with room for two reinforcement bars along the longitudinal rib.

Fig. 8 shows a perspective view of the parts included in a base part in the embodiment according to Fig. 7.

Fig. 9 shows a perspective view of the base part in Fig. 8 with pipes mounted therein.

Fig. 10 shows a plan view of the base part in Figs. 7 and 8.

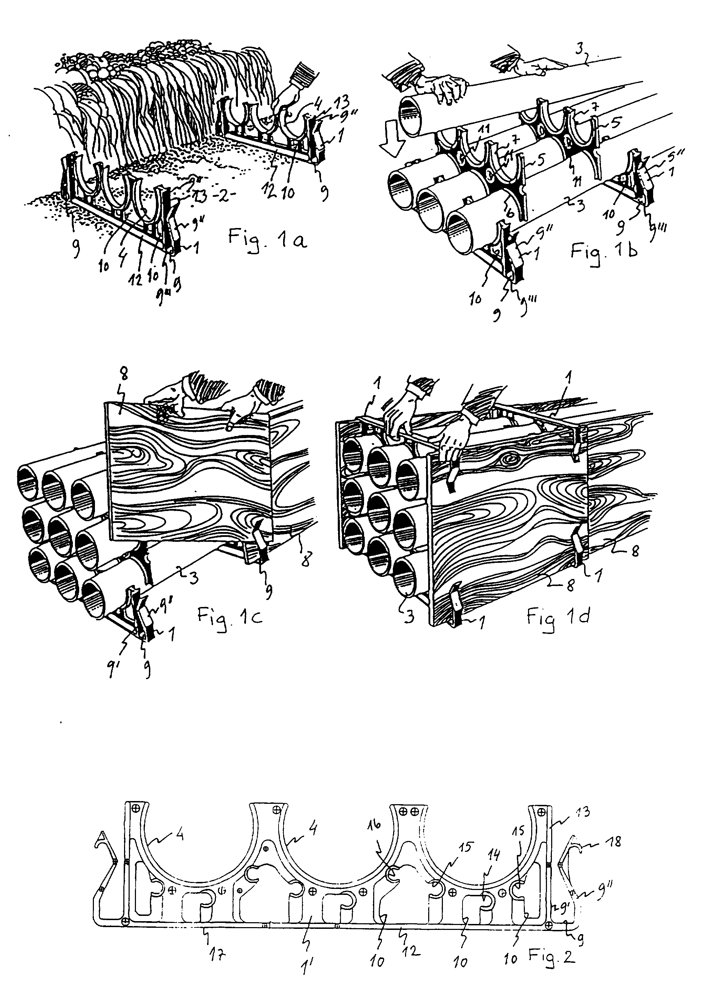

Figs. 1a - 1d show the assembling of a casting mould in accordance with the previously known technique. Concrete is to be poured into the casting mould in order thereby to form a pipe assembly, preferably for cables. As can be seen from Fig. 1a, base parts 1 included in the casting mould and preferably made of plastic are first placed at a distance from one another on the ground which has already been levelled, most often on the bottom 2 of a pit or a trench. A first row of pipes 3 are then snapped into place in recesses 4 provided for this purpose in the base parts 1, after which intermediate parts 5, preferably made of plastic and having pipe-receiving recesses 6 and 7 arranged, respectively, on the underside and upper side, are placed at a distance from one another and from the base parts 1, as can be seen from Fig. 1b, and are snapped securely onto the pipes 3 in the first row already mounted on the base parts 1. The next row of pipes 3 and further intermediate parts 5 are then put into place in the same way, and, following the third and uppermost row of pipes 3, mould panels 8 are fitted in sockets 9 arranged at the outer ends of the base parts 1, as can be seen from Fig. 1c. Finally, base parts 1 are once again applied, although inverted, so that the pipes in the uppermost row snap into the recesses 4 and so that the mould panels 8 are received in the sockets 9, as can be seen from Fig. 1d. The casting mould is now ready, and after reinforcement bars (not shown in Figs. 1a - d) have been placed, as required, in holes 10 formed on the base part or in holes 11 formed on the intermediate part, concrete can be poured into the mould so that an embedded pipe assembly for cables is obtained. For stiffening the base part, the latter has a longitudinal rib 12 and, arranged at right angles to the latter at the outer ends of the base part, side ribs 13 which are connected to the longitudinal rib. Each socket 9 is delimited by the outer surface 9' of the side rib and by a holder arm 9" which is connected to the outer ends of the base part, is preferably inwardly sprung and is arranged such that the lower end of the arm 9'' is connected integrally to a part 9''' which extends from the base part substantially as an extension of the longitudinal rib 12. In the previously known embodiment the distances between the pipes and between pipes and mould panels are assumed to be at least 30 mm in order to make it possible, inter alia, to provide room for vibration rods to be pushed down into the concrete between the pipes and between the pipes and the mould panels in the casting mould. It should be possible to dispense completely with the use of vibration rods if the casting mould is held together better and if the concrete has the right consistency (flowability).

In the figures discussed hereinbelow, similar components have been given the same references. However, these parts designated by the same references can differ somewhat in form, which does not in any way limit the invention.

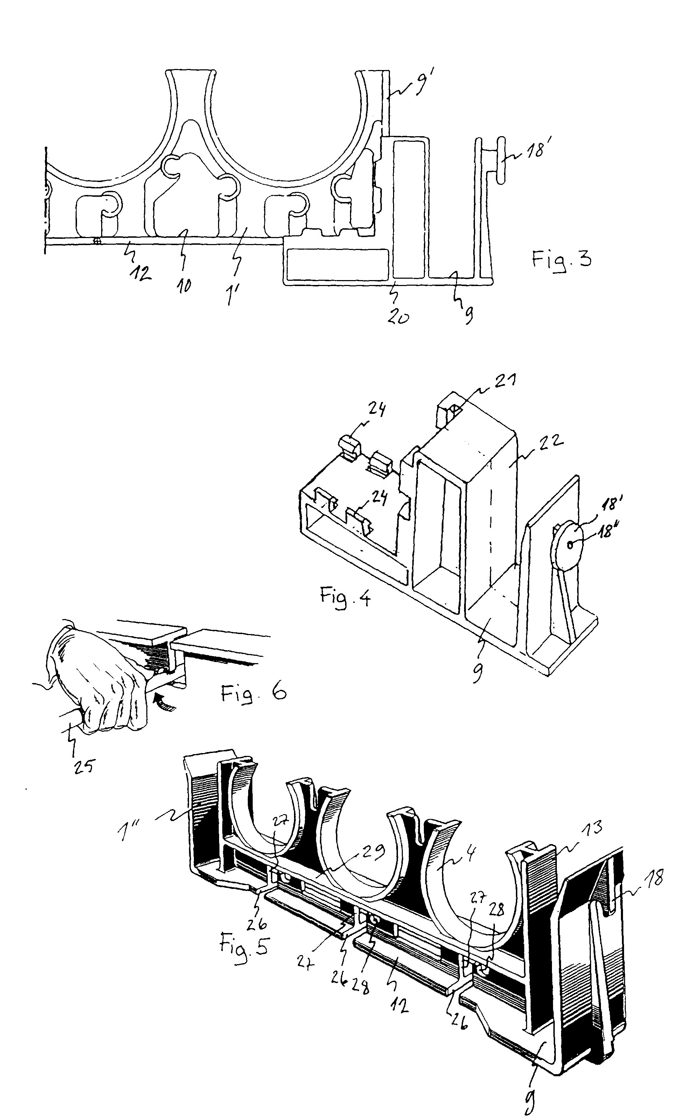

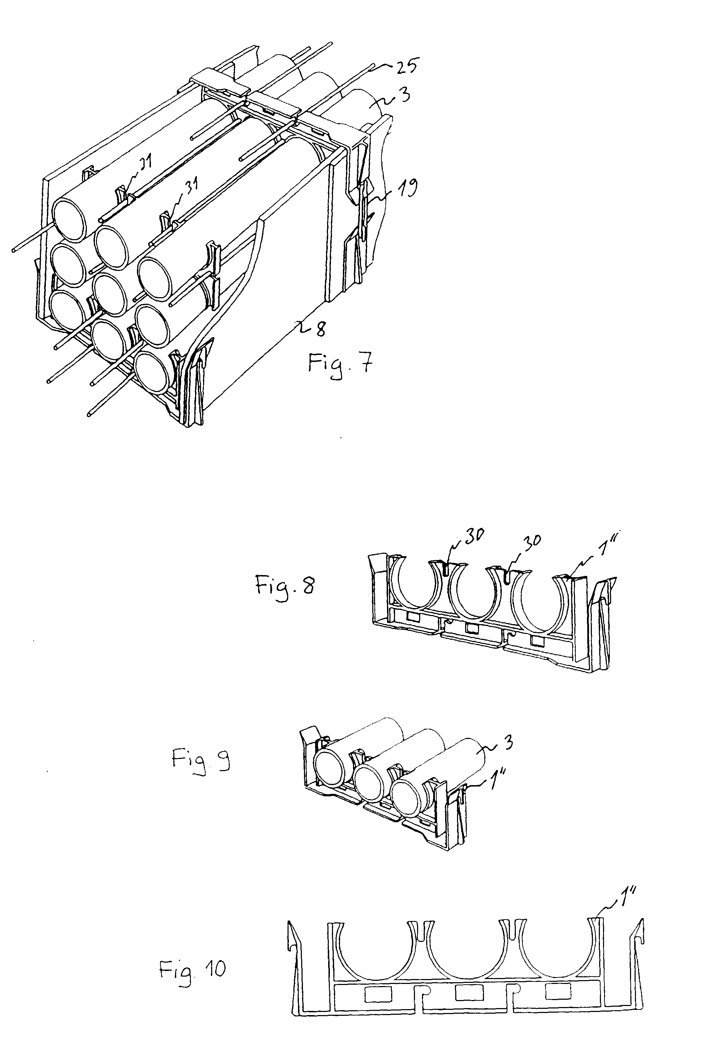

Fig. 2 shows certain improvements which have been brought about according to the invention in respect of the base part 1' included in a casting mould arrangement. Pockets 14, 15 and 16 connected to the holes 10 have been made in the base part 1', the pockets 14 being arranged approximately 25 mm from the outer surface 17 of the longitudinal rib 12, the pockets 15 being arranged approximately 35 mm from the outer surface 17 of the longitudinal rib 12, and the pockets 16 being arranged approximately 50 mm from the outer surface 17 of the longitudinal rib 12. These positions of the pockets are based on the standards which are prescribed for the positioning of reinforcement bars in a concrete mould of this type. The measurements mentioned above are therefore only given as practical examples and can of course be varied within the scope of the patent claims both in terms of their number and in terms of their mutual positioning shown on the base part. The pockets are shaped in such a way that the width of their opening towards the holes 10 is slightly smaller than the diameter of a conventional reinforcement bar, so that each reinforcement bar can be pushed into position by a snap action, as is shown in Fig. 6, and can also to a certain extent, depending on the size and position of the entrance opening of the pocket, be held in the latter when it has been positioned therein. The free end of the holder arm 9'' of the socket 9 has a bent portion, which forms a hook-shaped part 18. The hook-shaped parts 18 of two base parts mounted opposite each other on the underside and top side, respectively, of the casting mould are, as is shown in conjunction with the embodiment in Fig. 7, secured to each other by means of a connection member 19, which preferably consists of a relatively stiff rubber ring, which, when the concrete is poured into the casting mould, prevents the upper base parts from bouncing out of their positions and the casting mould thereby falling apart. The connection member 19 can also consist of a cord, preferably made of metal, or the like, which is wound round the hooks and which holds the base parts securely in place when they have been fitted on the casting mould. The sockets 9 are designed in such a way that they will be able to receive at least one mould panel. Because the holder arm 9" is sprung towards the side rib 13 it is possible to introduce two mould panels at the same time into each socket since, at the joint between two mould panels, these latter are usually placed overlapping in the sockets (see Figs. 1c and d). The sockets can also be wider in order to allow the edges of two adjoining mould panels to be placed edge to edge in the socket.

Figs. 3 and 4 show another embodiment of the arrangement according to the invention with a base part 1' without sockets at the ends. These sockets have been removed either during or after the production of the base part 1'. Instead of the socket according to the embodiment in Fig. 2, this embodiment comprises separate socket parts 20 with knob-shaped parts 18' arranged at the free ends of the holder arms. These knob-shaped parts 18' have in principle the same function as the hook-shaped parts 18 described above, but they are better suited for the application of a cord which can be secured by being wound round the knob or being knotted firmly on the latter. A hole 18'' can be formed through the knob 18', through which hole a securing member, such as a nail, a screw or the like, can be driven or screwed in for the purpose of securing the mould panels in place. This hole can also be arranged at another point on the holder arm 9". Each socket part arranged on either side of the base part has a groove 21 which is arranged along a portion 22 extending substantially parallel to the socket and into which a corresponding side rib 13 on the base part is intended to be introduced, after which catches 24 arranged on a protruding portion 23 are snapped firmly onto the edges of the longitudinal rib 12. In this embodiment of the arrangement the longitudinal rib 12 is provided on each side edge with recesses (not shown) in order to allow the enclosing edges of the groove 21 to be guided past the longitudinal rib and onto the side ribs. By means of this embodiment of the arrangement it is possible, as a result of the design of the socket part 20, to adapt the distance of the reinforcement bars with respect to the side, top and bottom coverings such that this distance is substantially identical over the whole casting mould. The dimensions of the socket part 20 which is used are thus dependent on which pocket 14, 15 or 16 is chosen for the reinforcement bars.

In a further development of the arrangement according to the invention, which is shown in Figs. 5 - 10, the base part 1" does not have holes, as in the embodiments described above, for receiving reinforcement bars 25, but instead is provided with an opening 26 in a lateral direction through the longitudinal rib 12, which opening 26 leads via a groove 27 to a pocket 28, i.e. the reinforcement bars do not have to be passed through any hole, but instead can be introduced into each pocket from the side. Fig. 5 shows an embodiment with three pockets along the longitudinal rib, and Figs. 7 - 10 show an embodiment with two pockets. Because the longitudinal rib in these embodiments is interrupted, as emerges clearly from Fig. 10, an additional longitudinal rib 29 has been arranged parallel to the original longitudinal rib 12. Smaller and preferably long and narrow recesses 30 are provided on the base part between the recesses for the pipes. These smaller recesses are also intended to receive reinforcement bars, these reinforcement parts being introduced into the smaller recesses after the first row of pipes has been placed on the base parts during the assembly, after which intermediate parts with smaller recesses 31 arranged at corresponding points are put into place so that the reinforcement bars are held in the continuous channel which is formed by the recesses 30 and 31. In the embodiments shown and described earlier, it has been necessary, as mentioned hereinabove, to pass the reinforcement bars through the holes in the base and intermediate parts. The positioning of the reinforcement bars is considerably facilitated in the embodiments according to Figs. 5 - 10, it being possible for this to be done at the same time as the pipes are fitted in place in the casting mould. The reinforcement bars, which in most cases are very long, do not therefore have to be passed through any hole in the already fitted base and/or intermediate parts in order to be brought into position.

A notch or a narrowing of the thickness can be provided at the point where the holder arm 9'' connects to the side rib 13 on the base part so that, preferably when the casting mould has hardened somewhat, the holder arms can be easily broken off or cut off and the mould panels 8 can be removed from the casting mould for reuse. However, the notch or the thickness of the holder arm 9" at the point of connection to the side rib 13 must be adapted such that the holder arm can withstand the pressure against the panel 8 which arises during casting.

The base parts described above have been described in relation to different numbers of pipes. Within the scope of the patent claims it is possible for a composite base part to be produced for each desired number of pipes, a suitable number of pipes side by side in one row in an individual base part being one, two or three.

The arrangement and the base part according to the invention, which have been described above with reference to the drawings, are not limited to the preferred embodiments, and instead these can of course be mutually modified by means of the features contained therein being combined with one another within the scope of the attached patent claims.

## Claims

1. Casting mould arrangement for the embedding of pipes (4), in which the individual pipes are assumed to be placed substantially at a predetermined distance from one another and which comprises at least two base parts (1', 1'') and at least one intermediate part (5), which parts are provided with recesses (4, 6, 7) intended to hold the pipes securely and to fix these in position, sockets (9) which have a holder arm (9'') and are arranged at each end of the said base part in order to hold securely mould panels (8) which are located on the sides of the casting mould and which delimit the casting mould laterally, and means (10, 11) for receiving reinforcement bars (25), characterized in that the said means for receiving reinforcement bars consist of pockets (14, 15, 16) in which reinforcement bars (25) are intended to be placed and retained at a predetermined distance from the bottom, top and side covering of the casting mould.

2. Arrangement according to Claim 1, characterized in that each of the said pockets (14, 15, 16) is connected to a recess (10; 26, 27) in the base part (1',1''), which recess can be closed, so that the one end of the reinforcement bars is pushed into and through a row of such recesses and thereafter snapped firmly into the pockets of the recesses, or can be open, so that reinforcement bars are pushed into a row of such recesses from the side and are thereafter snapped firmly into the pockets of the recesses.

3. Arrangement according to Claim 1 or 2, characterized in that each base part (1', 1'') is designed such that the said reinforcement bar (25) can be snapped into the said pocket (14, 15, 16) through an opening which leads into the pocket and which is smaller than the diameter of the reinforcement bar, and in that the said opening to the said pocket is arranged such that a reinforcement bar (25) can be pushed sideways into the said pocket (14, 15, 16).

4. Arrangement according to any one of the preceding claims, characterized in that a hook-shaped or knob-shaped part (18) is arranged on the free end of the said holder arm (9'') so that the upper and lower base parts (1', 1'') can be secured to each other by means of a connection member, such as an elastic loop, preferably made of rubber, a cord, preferably made of metal, or the like, in order to hold the casting mould together.

5. Arrangement according to Claim 4, characterized in that the hook-shaped or knob-shaped part (18) is made integral with the said holder arm (9"), which constitutes an outer limit of the said socket (9).

6. Arrangement according to Claim 5, characterized in that a hole (18'') is made in the holder arm (9''), preferably through the hook-shaped or knob-shaped part (18), through which hole a securing member is intended to be driven in for the purpose of fixing the mould panels in place.

7. Base part for the embedding of pipes (4), in which the individual pipes are assumed to be placed substantially at a predetermined distance from one another and which is provided with recesses (4, 6, 7) intended to hold the pipes securely and to fix these in position, sockets (9) which have a holder arm (9'') and are arranged at each end of the said base part in order to hold securely mould panels (8) which are located on the sides of the casting mould and which delimit the casting mould laterally, and means (10, 11) for receiving reinforcement bars (25), characterized in that the said means for receiving reinforcement bars consist of pockets (14, 15, 16) in which reinforcement bars (25) are intended to be placed and retained at a predetermined distance from the bottom, top and side covering of the casting mould.

8. Base part according to Claim 7, characterized in that each of the said pockets (14, 15, 16) is connected to a recess (10; 26, 27) in the base part, which recess can be closed, so that the one end of the reinforcement bars is pushed into and through a row of such recesses and thereafter snapped firmly into the pockets of the recesses, or can be open, so that reinforcement bars are pushed into a row of such recesses from the side and are thereafter snapped firmly into the pockets of the recesses.

9. Base part according to Claim 8, characterized in that each base part (1',1'') is designed such that the said reinforcement bar (25) can be snapped into the said pocket (14, 15, 16) through an opening which leads into the pocket and which is smaller than the diameter of the reinforcement bar, and in that the said opening to the said pocket is arranged such that a reinforcement bar (25) can be pushed sideways into the said pocket (14, 15, 16).

10. Base part according to any one of the preceding claims, characterized in that a hook-shaped or knob-shaped part (18) is arranged on the free end of the said holder arm (9'') so that the upper and lower base parts (1', 1'') can be secured to each other by means of a connection member, such as an elastic loop, preferably made of rubber, a cord, preferably made of metal, or the like, in order to hold the casting mould together.

11. Base part according to Claim 10, characterized in that the hook-shaped or knob-shaped part (18) is made integral with the said holder arm (9"), which constitutes an outer limit of the said socket (9).

12. Base part according to Claim 11, characterized in that a hole (18'') is made in the holder arm (9''), preferably through the hook-shaped or knob-shaped part (18), through which hole a securing member is intended to be driven in for the purpose of fixing the mould panels in place.

## Patentansprüche

1. Gußform zum Eingraben bzw. Aufnehmen von Rohren (4), in welcher von den einzelnen Rohren angenommen ist, daß sie im wesentlichen in einem vorbestimmten Abstand voneinander angeordnet sind, und welche zumindest zwei Basisteile (1', 1") und wenigstens ein Zwischenteil (5), wobei die Teile mit Ausnehmungen (4, 6, 7), welche die Rohre sicher halten und diese in Position fixieren sollen, Sockeln bzw. Aufnahmen (9), welche einen Haltearm (9") aufweisen und an jedem Ende des Basisteils angeordnet sind, um Gußtafeln (8) sicher zu halten, welche an den Seiten der Gußform positioniert sind und welche die Gußform seitlich begrenzen, und Einrichtungen (10, 11) zur Aufnahme von Armierungsstäben (25) umfaßt, dadurch gekennzeichnet, daß die Einrichtungen zur Aufnahme von Armierungsstäben aus Taschen bzw. Löchern (14, 15, 16) bestehen, in welchen die Armierungsstäbe (25) angeordnet und in einem vorbestimmten Abstand von der Boden-, Deck- und Seitenabdeckung der Gußform gehalten werden sollen.

2. Vorrichtung nach Anspruch 1, dadurch gekennzeichnet, daß jede der Taschen (14, 15, 16) mit einer Ausnehmung (10; 26, 27) in dem Basisteil (1', 1") verbunden ist, wobei die Ausnehmung geschlossen sein kann, sodaß das eine Ende der Armierungsstäbe in und durch eine Reihe derartiger Ausnehmungen geschoben wird und danach fest in den Taschen der Ausnehmungen verrastet wird, oder offen sein kann, sodaß Armierungsstäbe in eine Reihe derartiger Ausnehmungen von der Seite gedrückt werden und danach fest in den Taschen der Ausnehmungen verrastet werden.

3. Vorrichtung nach Anspruch 1 oder 2, dadurch gekennzeichnet, daß jedes Basisteil (1', 1") derart ausgebildet ist, daß der Armierungsstab (25) in die Tasche (14, 15, 16) durch eine Öffnung eingerastet werden kann, welche in die Tasche führt und welche kleiner ist als der Durchmesser des Armierungsstabes und daß die Öffnung zu der Tasche so angeordnet ist, daß ein Armierungsstab (25) seitlich in die Tasche (14, 15, 16) gedrückt werden kann.

4. Vorrichtung nach einem der vorangehenden Ansprüche, dadurch gekennzeichnet, daß ein hakenförmiges oder knopfförmiges Teil (18) an dem freien Ende des Haltearms (9") angeordnet ist, sodaß die oberen und unteren Basisteile (1', 1") aneinander mit Hilfe eines Verbindungsgliedes, wie beispielsweise einer elastischen Schlaufe, vorzugsweise aus Gummi, einer Schnur, vorzugsweise aus Metall, oder dgl. gesichert werden können, um die Gußform zusammenzuhalten.

5. Vorrichtung nach Anspruch 4, dadurch gekennzeichnet, daß das hakenförmige oder knopfförmige Teil (18) einstückig mit dem Haltearm (9") ausgebildet ist, welcher eine äußere Begrenzung des Sockels (9) darstellt.

6. Vorrichtung nach Anspruch 5, dadurch gekennzeichnet, daß ein Loch (18") in dem Haltearm (9"), vorzugsweise durch das hakenförmige oder knopfförmige Teil (18) hindurch, ausgebildet ist, durch welches Loch ein Sicherungsglied zum Zweck einer Fixierung der Gußtafeln in ihrer Position eingetrieben werden soll.

7. Basisteil zum Eingraben bzw. Aufnehmen von Rohren (4), in welchem von den einzelnen Rohren angenommen ist, daß sie im wesentlichen in einem vorbestimmten Abstand voneinander angeordnet sind, und welches mit Ausnehmungen (4, 6, 7), welche die Rohre sicher halten und diese in Position fixieren sollen, Sockeln bzw. Aufnahmen (9), welche einen Haltearm (9") aufweisen und an jedem Ende des Basisteils angeordnet sind, um Gußtafeln (8) sicher zu halten, welche an den Seiten der Gußform positioniert sind und welche die Gußform seitlich begrenzen, und Einrichtungen (10, 11) zur Aufnahme von Armierungsstäben (25) versehen ist, dadurch gekennzeichnet, daß die Einrichtungen zur Aufnahme von Armierungsstäben aus Taschen bzw. Löchern (14, 15, 16) bestehen, in welchen die Armierungsstäbe (25) angeordnet und in einem vorbestimmten Abstand von der Boden-, Deck- und Seitenabdeckung der Gußform gehalten werden sollen.

8. Basisteil nach Anspruch 7, dadurch gekennzeichnet, daß jede der Taschen (14, 15, 16) mit einer Ausnehmung (10; 26, 27) in dem Basisteil verbunden ist, wobei die Ausnehmung geschlossen sein kann, sodaß das eine Ende der Armierungsstäbe in und durch eine Reihe derartiger Ausnehmungen geschoben wird und danach fest in den Taschen der Ausnehmungen verrastet wird, oder offen sein kann, sodaß Armierungsstäbe in eine Reihe derartiger Ausnehmungen von der Seite gedrückt werden und danach fest in den Taschen der Ausnehmungen verrastet werden.

9. Basisteil nach Anspruch 8, dadurch gekennzeichnet, daß jedes Basisteil (1', 1") derart ausgebildet ist, daß der Armierungsstab (25) in die Tasche (14, 15, 16) durch eine Öffnung eingerastet werden kann, welche in die Tasche führt und welche kleiner ist als der Durchmesser des Armierungsstabes und daß die Öffnung zu der Tasche so angeordnet ist, daß ein Armierungsstab (25) seitlich in die Tasche (14, 15, 16) gedrückt werden kann.

10. Basisteil nach einem der vorangehenden Ansprüche, dadurch gekennzeichnet, daß ein hakenförmiges oder knopfförmiges Teil (18) an dem freien Ende des Haltearms (9") angeordnet ist, sodaß die oberen und unteren Basisteile (1', 1") aneinander mit Hilfe eines Verbindungsgliedes, wie beispielsweise einer elastischen Schlaufe, vorzugsweise aus Gummi, einer Schnur, vorzugsweise aus Metall, oder dergleichen gesichert werden können, um die Gußform zusammenzuhalten.

11. Basisteil nach Anspruch 10, dadurch gekennzeichnet, daß das hakenförmige oder knopfförmige Teil (18) einstückig mit dem Haltearm (9") ausgebildet ist, welcher eine äußere Be grenzung des Sockels (9) darstellt.

12. Basisteil nach Anspruch 11, dadurch gekennzeichnet, daß ein Loch (18") in dem Haltearm (9"), vorzugsweise durch das hakenförmige oder knopfförmige Teil (18) hindurch, ausgebildet ist, durch welches Loch ein Sicherungsglied zum Zweck einer Fixierung der Gußtafeln in ihrer Position eingetrieben werden soll.

## Revendications

1. Dispositif formant moule de coulée pour l'enrobage de tuyaux (4), dans lequel les tuyaux individuels sont supposés être placés sensiblement à distance déterminée à l'avance les uns des autres et comportant au moins deux parties (1', 1") formant base et au moins une partie (5) intermédiaire, parties qui sont munies d'évidements (4, 6, 7) destinés à maintenir les tuyaux de manière fixe et à les fixer en position, des socles (9) qui ont un bras (9") support et sont agencés à chaque extrémité de la partie formant base afin de maintenir de manière fixe des panneaux (8) de moule qui se trouvent sur les côtés du moule de coulée et qui délimitent le moule de coulée latéralement, et des moyens (10, 11) destinés à recevoir des barres (25) de renforcement, caractérisé en ce que les moyens destinés à recevoir des barres de renforcement sont constitués de poches (14, 15, 16) dans lesquelles les barres (25) de renforcement sont destinées à être placées et maintenues à une distance déterminée à l'avance des recouvrements de fond, du dessus et latéraux du moule de coulée.

2. Dispositif suivant la revendication 1, caractérisé en ce que chacune des poches (14, 15, 16) est reliée à un évidement (10 ; 26, 27) dans la partie (1', 1") formant base, évidement qui peut être fermé, de sorte que l'une des extrémités des barres de renforcement est poussée dans une rangée d'évidements de ce genre et à travers une rangée d'évidements de ce genre et est ensuite encliquetée fermement dans les poches des évidements. ou peut être ouverte, de sorte que des barres de renforcement sont poussées dans une rangée d'évidements de ce genre à partir du côté et sont ensuite encliquetées fermement dans les poches des évidements.

3. Dispositif suivant la revendication 1 ou 2, caractérisé en ce que chaque partie (1', 1") formant base est conçue de sorte que la barre (25) de renforcement peut être encliquetée dans la poche (14, 15, 16) par une ouverture qui mène dans la poche et qui est plus petite que le diamètre de la barre de renforcement, et en ce que l'ouverture vers la poche est agencée de sorte qu'une barre (25) de renforcement peut être poussée latéralement dans la poche (14, 15, 16).

4. Dispositif suivant l'une quelconque des revendications précédentes, caractérisé en ce qu'une partie (18) en forme de bouton ou en forme de crochet est agencée sur l'extrémité libre du bras (9") support de sorte que les parties (1', 1") formant base supérieure et inférieure peuvent être fixées l'une à l'autre au moyen d'un élément de liaison, tel qu'une boucle élastique, de préférence en caoutchouc, un cordon, de préférence en métal, ou analogue, afin de maintenir le moule de coulée à l'état réuni.

5. Dispositif suivant la revendication 4, caractérisé en ce que la partie (18) en forme de bouton ou en forme de crochet est d'une pièce avec le bras (9") support, qui constitue une limite extérieure du socle (9).

6. Dispositif suivant la revendication 5, caractérisé en ce qu'un trou (18") est formé dans le bras (9") support, de préférence à travers la partie (18) en forme de bouton ou en forme de crochet, et à travers ce trou, un élément de fixation est destiné à être entraîné dans le but de fixer les panneaux de moule en place.

7. Partie formant base pour l'enrobage de tuyaux (4), dans laquelle les tuyaux individuels sont supposés être placés sensiblement à distance déterminée à l'avance les uns des autres et qui est munie d'évidements (4, 6, 7) destinés à maintenir les tuyaux de manière fixe et à les fixer en position, des socles (9) qui comportent un bras (9") support et sont agencés à chaque extrémité de la partie formant base afin de maintenir fixement des panneaux (8) de moules qui se trouvent sur les côtés du moule de coulée et qui délimitent le moule de coulée latéralement, et des moyens (10, 11) destinés à recevoir des barres (25) de renforcement, caractérisée en ce que les moyens destinés à recevoir des barres de renforcement sont constitués de poches (14, 15, 16) dans lesquelles des barres (25) de renforcement sont destinées à être placées et maintenues à distance déterminée à l'avance des recouvrements de fond, du dessus et latéraux du moule de coulée.

8. Partie formant base suivant la revendication 7, caractérisée en ce que chacune des poches (14, 15, 16) est reliée à un évidement (10 ; 26, 27) dans la partie formant base, évidement qui peut être fermé, de sorte que l'une des extrémités des barres de renforcement est poussée dans une rangée d'évidements de ce genre et à travers une rangée d'évidements de ce genre et est ensuite encliquetée fermement dans les poches des évidements, ou peut être ouverte de sorte que des barres de renforcement sont poussées dans une rangée d'évidements de ce genre à partir du côté et sont ensuite encliquetées fermement dans les poches des évidements.

9. Partie formant base suivant la revendication 8, caractérisée en ce que chaque partie (1', 1") formant base est conçue de sorte que la barre (25) de renforcement peut être encliquetée dans la poche (14, 15, 16) par une ouverture qui conduit dans la poche et qui est plus petite que le diamètre de la barre de renforcement, et en ce que l'ouverture vers la poche est agencée de sorte qu'une barre (25) de renforcement peut être poussée latéralement dans la poche (14, 15, 16).

10. Partie formant base suivant l'une quelconque des revendications précédentes, caractérisée en ce qu'une partie (18) en forme de bouton ou en forme de crochet est agencée sur l'extrémité libre du bras (9") support de sorte que les parties (1', 1") formant base supérieure et inférieure peuvent être fixées l'une à l'autre au moyen d'un élément de liaison, tel qu'une boucle élastique, de préférence en caoutchouc, un cordon, de préférence en métal, ou analogue, afin de maintenir le moule de coulée à l'état réuni.

11. Partie formant base suivant la revendication 10, caractérisée en ce que la partie (18) en forme de bouton ou en forme de crochet est d'une pièce avec le bras (9") support, qui constitue une limite extérieure du socle (9).

12. Partie formant base suivant la revendication 11, caractérisée en ce qu'un trou (18") est formé dans le bras (9") support, de préférence à travers la partie (18) en forme de bouton ou en forme de crochet, et à travers ce trou, un élément de fixation est destiné à être entraîné à l'intérieur dans le but de fixer les panneaux de moule en place.
